(19) Europäisches Patentamt

European Patent Office

Office européen des brevets

(11) **EP 2 877 397 B1**

(12) **EUROPÄISCHE PATENTSCHRIFT**

(45) Veröffentlichungstag und Bekanntmachung des Hinweises auf die Patenterteilung:
**02.11.2016 Patentblatt 2016/44**

(21) Anmeldenummer: **13753538.1**

(22) Anmeldetag: **19.07.2013**

(51) Int Cl.:
**B64C 27/00** *(2006.01)*     **B64C 27/12** *(2006.01)*
**B64D 35/02** *(2006.01)*     **B64D 41/00** *(2006.01)*

(86) Internationale Anmeldenummer:
**PCT/DE2013/000394**

(87) Internationale Veröffentlichungsnummer:
**WO 2014/015847 (30.01.2014 Gazette 2014/05)**

(54) **HILFSANTRIEBSSYSTEM FÜR EINEN HUBSCHRAUBER**

AUXILIARY DRIVE SYSTEM FOR A HELICOPTER

SYSTÈME D'ENTRAÎNEMENT AUXILIAIRE POUR UN HÉLICOPTÈRE

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **26.07.2012 DE 102012014751**

(43) Veröffentlichungstag der Anmeldung:
**03.06.2015 Patentblatt 2015/23**

(73) Patentinhaber: **Airbus Defence and Space GmbH 82024 Taufkirchen (DE)**

(72) Erfinder: **JÄNKER, Peter 85521 Ottobrunn (DE)**

(74) Vertreter: **Kopf Westenberger Wachenhausen Patentanwälte PartG mbB Brienner Straße 11 80333 München (DE)**

(56) Entgegenhaltungen:
**EP-A1- 1 247 736     GB-A- 2 447 641
US-A- 2 394 513     US-A- 4 609 165**

**Beschreibung**

GEBIET DER ERFINDUNG

Die Erfindung betrifft einen Hubschrauber mit einem Antriebssystem, ein Verfahren zum Betreiben eines Hilfsantriebssystems eines Hubschraubers und eine Steuerung für ein Hilfsantriebssystems eines Hubschraubers.

HINTERGRUND DER ERFINDUNG

Die Notlandung eines Hubschraubers bei Turbinenausfall erfolgt nach dem Autorotationsverfahren. Dieses Verfahren setzt ein umfassendes Training des Piloten voraus und kann in einer gegebenen Flugsituation und Umgebung kritisch sein.
Deswegen werden bestimmte Hubschrauber mit Assistenzsystemen ausgerüstet, die auf einem elektrischen Hilfsantrieb basieren, der aus einer Batterie gespeist wird. Ein derartiges Assistenzsystem erlaubt eine weitgehend kontrollierte Landung. Kosten und Gewicht dieses Assistenzsystems sind aber aufgrund der Batterie und der Motortechnik sehr hoch.
Weiter sind Hilfsantriebe bekannt, die auf einem Schwungrad basieren. Beispielsweise zeigt die US 4,609,165 A einen Hubschrauber, bei dem ein Schwungrad als Hilfsenergiesystem verwendet wird.
Eine Antriebsbaugruppe für ein Kraftfahrzeug, in der ein abkoppelbares Schwungrad integriert ist, ist in DE 102009058695 A1 beschrieben. DE 102011014098 A1 beschreibt einen Schwungradspeicher. Ein Hybridantrieb eines Fahrzeugs mit einem Schwungrad als Energiespeicher ist aus DE 102004033039 A1 bekannt. EP 1247736 A1 beschreibt ein Luftfahrzeug, wobei Motorleistung genutzt wird, um mechanische Energiespeichermittel zu rotieren. Eine Kraftübertragungsvorrichtung für Hubschrauber ist beispielsweise aus EP0753456A1 bekannt. US2394513 A offenbart einen Helikopter mit einem Schwungmassenspeicher. , welcher die Merkmale der Präambel des 1. Anspruchs aufweist.

ZUSAMMENFASSUNG DER ERFINDUNG

Es ist Aufgabe der Erfindung, ein Hilfsantriebssystem für einen Hubschrauber mit einem Schwungradspeicher dergestalt zu verbessern dass eine vorgebbare Leistung zum Rotor übertragen werden kann.
Diese Aufgabe wird durch den Gegenstand der unabhängigen Ansprüche gelöst. Weitere Ausführungsformen der Erfindung ergeben sich aus den abhängigen Ansprüchen und aus der folgenden Beschreibung.
Ein erfindungsgemäßer Hubschrauber kann einen Hauptrotor und einen Heckrotor oder aber auch mehrere Hauptrotoren umfassen. Beispielsweise ist der Hubschrauber ein einmotoriger Hubschrauber mit einem einzigen Antrieb.
Gemäß einer Ausführungsform der Erfindung umfasst das Antriebssystem des Hubschraubers einen Hauptantrieb zum Antrieb eines Rotors; einen Schwungmassenspeicher, der wenigstens ein Schwungrad umfasst; ein erstes Getriebe, das den Schwungmassenspeicher derart an den Hauptantrieb koppelt, dass bei Betrieb des Hauptantriebs Leistung aus dem Antrieb in den Schwungmassenspeicher übertragbar ist; und ein zweites, variables Getriebe, das den Schwungmassenspeicher derart mit dem Rotor des Hubschraubers verbindet, dass durch Einstellen eines Übersetzungsverhältnisses des variablen Getriebes eine vorgegebene Leistung zum Rotor übertragbar ist.
Mit anderen Worten umfasst der Antrieb des Hubschraubers einen konventionellen Hauptantrieb, wie etwa eine Turbine, und ein Hilfsantriebssystem, das als Energiespeicher und Antriebselement einen Schwungmassenspeicher umfasst. Der Schwungmassenspeicher kann während eines Normalbetriebs des Hauptantriebs über das erste Getriebe auf rein mechanischem Weg mit Energie geladen werden. Falls der Hauptantrieb unterstützt werden soll oder der Hauptantrieb ausgefallen ist, kann die im Schwungmassenspeicher gespeicherte Rotationsenergie dazu verwendet werden, den Rotor anzutreiben. Um die vom Schwungmassenspeicher zum Rotor übertragene Leistung einstellen zu können, umfasst das Hilfsantriebssystem ein variables, d. h. einstellbares Getriebe.
Gemäß einer Ausführungsform der Erfindung umfasst das variable Getriebe ein stufenloses Getriebe. Beispielsweise ist das variable Getriebe ein Riemengetriebe, bei dem ein Riemen oder eine Kette zwischen zwei Paaren von Kegelscheiben läuft. Durch Ändern des Abstands der Kegelscheiben eines Paares von Kegelscheiben kann das Übersetzungsverhältnis des Getriebes eingestellt werden. Es sind jedoch auch andere Typen von stufenlosen Getrieben möglich, wie etwa hydrodynamische Getriebe.
Gemäß einer Ausführungsform der Erfindung ist das variable Getriebe elektrisch ansteuerbar. Das variable Getriebe kann Aktuatoren (elektrische Motoren) umfassen, über die das Übersetzungsverhältnis des variablen Getriebes von einer elektrischen Steuerung eingestellt werden kann. Auf diese Weise kann das gewünschte Übersetzungsverhältnis von der Steuerung ermittelt und eingestellt werden.
Gemäß einer Ausführungsform der Erfindung umfasst das erste Getriebe ein Getriebe mit festem Übersetzungsverhältnis. Das erste Getriebe kann ein einfaches Zahnradgetriebe sein, das dazu ausgeführt ist, die vom Hauptantrieb im Normalbetrieb gelieferte Drehgeschwindigkeit auf eine maximale Drehgeschwindigkeit des Schwungrads des Schwungmassenspeichers zu übersetzen.

Gemäß einer Ausführungsform der Erfindung umfasst das Antriebssystem weiter einen Freilauf zwischen dem ersten Getriebe und dem Hauptantrieb. Mit anderen Worten ist das Hilfsantriebssystem an den primären Antriebsstrang angekoppelt. Auf diese Weise kann verhindert werden, dass ein blockierter oder sich langsam drehender Hauptantrieb dem Schwungmassenspeicher Energie entzieht.

Gemäß einer Ausführungsform der Erfindung umfasst das Antriebssystem weiter ein Hauptgetriebe zwischen dem Hauptantrieb und dem Rotor. Das Hauptgetriebe weist einen ersten Eingang auf, mit dem der Hauptantrieb gekoppelt ist. Außerdem weist das Hauptgetriebe einen zweiten Eingang auf, mit dem der Schwungmassenspeicher über das variable Getriebe gekoppelt ist. Auf diese Weise können der Betrieb des Rotors über den Hauptantrieb und der Betrieb des Rotors über den Schwungmassenspeicher komplett entkoppelt werden. Über das gesteuerte variable Getriebe kann mechanische Leistung in den zweiten Eingang des Hauptgetriebes kontrolliert eingespeist werden.

Gemäß einer Ausführungsform der Erfindung umfasst das Antriebssystem weiter eine Antriebswelle, über die der Hauptantrieb mit dem ersten Eingang des Hauptgetriebes gekoppelt ist. An diese Antriebswelle kann auch das erste Getriebe gekoppelt sein, um einen Teil der Leistung des Hauptantriebs an den Schwungmassenspeicher zu übertragen.

Gemäß einer Ausführungsform der Erfindung ist die Antriebswelle über einen Freilauf an das Hauptgetriebe gekoppelt. Der Freilauf sorgt dafür, dass ein langsam drehender Hauptantrieb vom Hauptgetriebe entkoppelt wird. Dadurch wird auch sichergestellt, dass ein defekter blockierter Hauptantrieb den Rotor nicht behindert.

Gemäß einer Ausführungsform der Erfindung umfasst das Antriebssystem weiter eine Hilfsantriebswelle, über die das variable Getriebe mit dem zweiten Eingang des Hauptgetriebes gekoppelt ist. Die Hilfsantriebswelle kann dabei über einen Freilauf an das Hauptgetriebe gekoppelt sein. Dieser Freilauf kann dazu verwendet werden sicherzustellen, dass nur Leistung vom Schwungmassenspeicher zum Rotor, aber nicht in umgekehrter Richtung übertagen werden kann.

Mit anderen Worten umfasst der Hubschrauber ein Antriebssystem, das ein mechanisches Hilfsantriebssystem umfasst, bei dem Energie aus dem Hauptantrieb auf rein mechanischem Weg vom Hauptantrieb in das Hilfsantriebssystem und vom Hilfsantriebssystem zum Rotor übertragen werden kann.

Erfindungsgemäß umfasst das Verfahren zum Betreiben eines Hilfsantriebssystems eines Hubschraubers die Schritte: Erfassen, ob ein Hauptantrieb des Hubschraubers eine gewünschte Leistung liefert; falls der Hauptantrieb nicht die gewünschte Leistung liefert, Verbinden eines Schwungmassenspeichers mit einem Rotor des Hubschraubers mittels eines variablen Getriebes, wobei der Schwungmassenspeicher durch den Hauptantrieb im Normalbetrieb mechanisch geladen wurde; und Steuern eines Übersetzungsverhältnisses des variablen Getriebes, so dass eine gewünschte Leistung zum Rotor übertragen wird.

Falls festgestellt wird, dass der Hauptantrieb, beispielsweise aufgrund eines Defekts nicht mehr die gewünschte Leistung liefert oder ganz ausgefallen ist, kann die in einem Hilfsantriebssystem gespeicherte Energie dazu verwendet werden, den Rotor weiter anzutreiben. Das Hilfsantriebssystem umfasst einen Schwungmassenspeicher, ein erstes Getriebe zum Laden des Schwungmassenspeichers über den Hauptantrieb, und ein zweites variables Getriebe zum Koppeln des Schwungmassenspeichers mit dem Rotor.

Das Hilfsantriebssystem und insbesondere der Schwungmassenspeicher kann beim Start über das erste Getriebe vom Hauptantrieb aufgeladen werden. Im Normalbetrieb des Hauptantriebs können geringe Leistungsverluste vom Hauptantrieb ersetzt werden.

Beim Ausfall des Hauptantriebs werden sowohl das Hauptgetriebe als auch das Hilfsantriebssystem durch Freiläufe vom stehenden oder bremsenden Hauptantrieb abgekoppelt.

Das Hilfsantriebssystem kann als Notlandesystem für einen Hubschrauber eingesetzt werden. Dazu kann es den Piloten beim Landen des Hubschraubers mit defektem oder ausgefallenem Hauptantrieb unterstützen.

Gemäß einer Ausführungsform der Erfindung umfasst das Verfahren weiter die Schritte: Erfassen, ob der Rotor in Autorotation betrieben wird; und falls der Rotor in Autorotation betrieben wird, Trennen des Schwungmassenspeichers vom Rotor. Das Betreiben des Rotors mit dem Hilfsantriebssystems kann unterbrochen werden, wenn der Rotor in Autorotation betrieben wird.

Gemäß einer Ausführungsform der Erfindung umfasst das Verfahren weiter die Schritte: Erfassen, ob ein Landevorgang eingeleitet wird; falls ein Landevorgang eingeleitet wird, Verbinden des Schwungmassenspeichers mit dem Rotor. Kurz bevor der Hubschrauber am Boden aufsetzt, kann das Hilfsantriebssystem dazu verwendet werden, (automatisch) zusätzliche Rotationsenergie in den Rotor einzuleiten, um den Sinkvorgang des Hubschraubers abzubremsen.

Die erfindungsgemäße Steuerung für ein Hilfsantriebssystems eines Hubschraubers, ist dazu ausgeführt, das Verfahren, so wie es obenstehend und untenstehend beschrieben ist, durchzuführen. Die Steuerung kann beispielsweise eine elektronische Steuerung sein.

Beispielsweise kann die Steuerung von einem Steuersystem des Hubschraubers Information über die aktuelle Leistung des Hauptantriebs oder zumindest dessen Rotationsgeschwindigkeit empfangen, um daraus abzuleiten, ob der Hauptantrieb eine gewünschte Leistung liefert oder defekt ist. Die Steuerung kann als Kontrollsystem zur Leistungsteuerung des Hubschraubers in mehreren Flugphasen, wie etwa Normalbetrieb, Autorotation oder Landevorgang, aufgefasst werden.

Auch kann der Schwungmassenspeicher Sensoren umfassen, die seine aktuelle Drehgeschwindigkeit erfassen und diese dann an die Steuerung melden. Mit diesen Daten kann die Steuerung das erforderliche Übersetzungsverhältnis des variablen Getriebes ermitteln.

Weiter kann die Steuerung Informationen von dem Steuersystems des Hubschraubers empfangen, ob der Pilot den Rotor in Autorotation gestellt hat, und/oder ob der Pilot mit dem Landevorgang begonnen hat. Mit diesen Daten kann die Steuerung dann das variable Getriebe wie gewünscht lösen oder entsprechend mit dem Rotor koppeln.

Im Folgenden werden Ausführungsbeispiele der Erfindung mit Bezug auf die beiliegenden Figuren detailliert beschrieben.

KURZE BESCHREIBUNG DER FIGUREN

**Fig. 1** zeigt eine schematische Ansicht eines Hubschraubers gemäß einer Ausführungsform der Erfindung.

**Fig. 2** zeigt eine schematische Ansicht eines Antriebssystems eines Hubschraubers gemäß einer Ausführungsform der Erfindung.

**Fig. 3** zeigt ein Flussdiagramm für ein Verfahren zum Betreiben eines Hilfsantriebssystems eines Hubschraubers gemäß einer Ausführungsform der Erfindung.

Grundsätzlich sind identische oder ähnliche Teile mit den gleichen Bezugszeichen versehen.

DETAILLIERTE BESCHREIBUNG VON AUSFÜHRUNGSBEISPIELEN

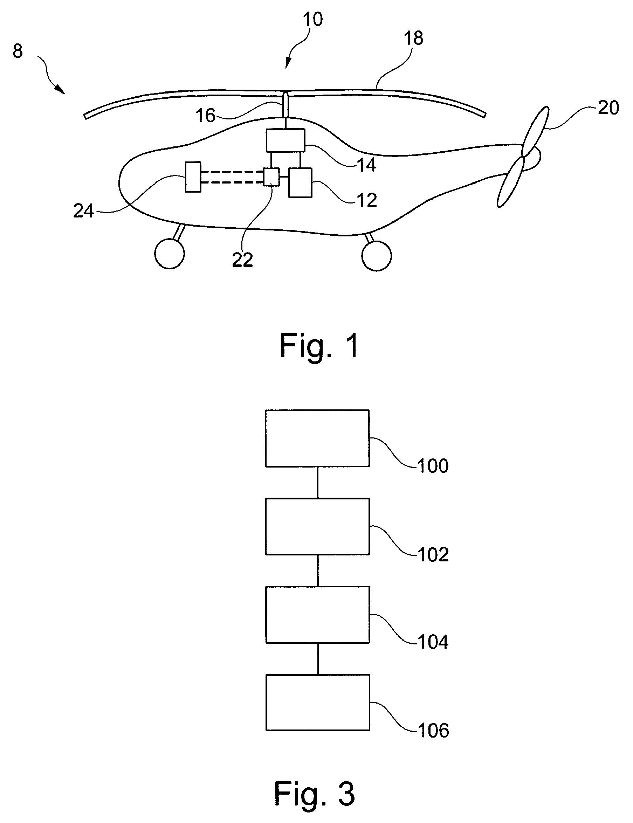

Die Fig. 1 zeigt einen Hubschrauber 8, der ein Antriebssystem 10 mit einem konventionellen Hauptantrieb 12 umfasst. Der Hauptantrieb 12 kann einen Verbrennungsmotor, wie etwa eine Turbine oder einen Kolbenmotor umfassen.

Der Hauptantrieb 12 ist über ein Hauptgetriebe 14 mit einer Rotorwelle 16 bzw. einem Rotormast 16 gekoppelt, an dessen Ende ein Rotor 18 des Hubschraubers 10 befestigt ist. In der Fig. 1 ist der Hubschrauber 10 als Hubschrauber mit einem Hauptrotor 18 und einem Heckrotor 20 dargestellt. Es ist zu verstehen, dass der Hubschrauber 10 mehr als einen Auftrieb erzeugenden Rotor 18 aufweisen kann und auch keinen Heckrotor 20 umfassen muss.

Der Hubschrauber 10 weist ein mechanisches Hilfsantriebssystem 22 auf, das dazu ausgeführt ist, im Falle eines Ausfalls des Hauptantriebs 12 dem Hauptgetriebe 14 Leistung zuzuführen. Dazu weist der Hubschrauber 10 eine Steuerung 24 auf, die dazu ausgeführt ist, einen Ausfall des Hauptantriebs 12 zu erkennen und das Hilfsantriebssystem 22 entsprechend anzusteuern.

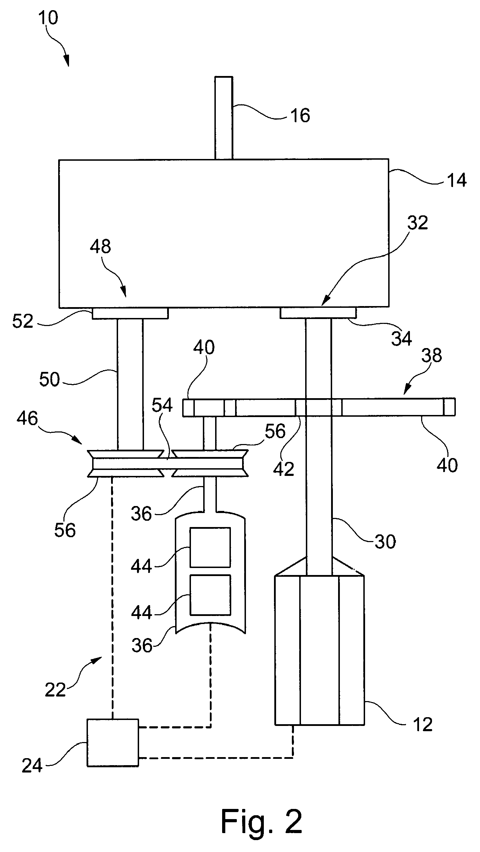

Die Fig. 2 zeigt einen Ausschnitt aus der Fig. 1 mit dem Antriebssystem 10 und zeigt insbesondere das Hilfsantriebssystem 22 detaillierter.

Der Hauptantrieb 12, beispielsweise eine Turbine 12, ist über eine Welle 30 mit einem ersten Eingang 32 des Hauptgetriebes 14 gekoppelt. Zwischen dem Eingang 32 und der Welle 30 befindet sich ein Freilauf 34, der Drehmoment von der Turbine 12 bzw. der Welle 30 in das Hauptgetriebe 14 übertragen kann, aber umgekehrt verhindert, dass Drehmoment vom Getriebe in den Hauptantrieb 12 übertragen wird.

Das Hilfsantriebssystem 22 umfasst einen Schwungmassenspeicher 36, der über eine Welle 36 mit einem Hilfsgetriebe 38 gekoppelt ist, das an seinem anderen Ende mit der Welle 30 und damit mit dem Hauptantrieb 12 gekoppelt ist. Das Hilfsgetriebe 38 kann ein Getriebe mit festem Übersetzungsverhältnis sein und beispielsweise zwei Zahnräder 40 umfassen.

Zwischen dem Hilfsgetriebe 38 und der Welle 30 ist ein Freilauf 42 angeordnet, der dazu ausgeführt ist, Drehmoment von der Welle 30 bzw. dem Hauptantrieb 12 zum Hilfsgetriebe 38 und damit zum Schwungmassenspeicher 36 zu übertragen, aber verhindert, dass Drehmoment vom Schwungmassenspeicher 36 zum Hauptantrieb 12 übertragen werden kann.

Auf diese Weise kann Leistung von dem Hauptantrieb 12 zum Schwungmassenspeicher 36 übertragen werden, wenn der Hauptantrieb 12 läuft. Im Normalbetrieb des Hubschraubers 10 wird ein erster Teil der von dem Hauptantrieb 12 erzeugten Leistung über den Freilauf 34 in das Hauptgetriebe 14 übertragen und dazu verwendet, den Rotor 18 des Hubschraubers 10 anzutreiben. Ein weiterer, zweiter Teil der Leistung (der gewöhnlich kleiner ist als der erste Teil) wird über das Hilfsgetriebe 38 zum Schwungmassenspeicher 36 übertragen, um die Schwungmassen in Rotation zu versetzen, d. h. den Schwungmassenspeicher 36 zu laden, und auch um Reibungsverluste im Schwungmassenspeicher 36 auszugleichen.

Fällt der Hauptantrieb 12 aus, kann sich der Schwungmassenspeicher 36 weiter drehen, ohne dass Leistung zurück den Hauptantrieb 12 übertragen wird.

Zum Speichern der Energie kann der Schwungmassenspeicher 36 ein oder mehrere Schwungräder 44 aufweisen. Es ist möglich, dass der Schwungmassenspeicher 36 lediglich ein Schwungrad 44 umfasst, aber auch mehrere und/oder gegenläufige Schwungräder 44 sind möglich.

Das Hilfsantriebssystem 22 umfasst weiter ein variables Getriebe 46, über das der Schwungmassenspeicher 36 mit einem zweiten Eingang 48 des Hauptgetriebes 14 gekoppelt ist. Ein Eingang des variablen Getriebes 46 ist mit der Welle 36 verbunden, die starr mit dem Schwungmassenspeicher 36 verbunden ist. Der andere Eingang des Getriebes 46 ist mit einer Welle 50 verbunden, die über einen Freilauf 52 mit dem zweiten Eingang 48 des Hauptgetriebes gekoppelt ist.

Der Freilauf 52 ist dazu ausgeführt, Drehmoment vom variablen Getriebe 46 zum Hauptgetriebe 14 zu übertragen, verhindert aber, dass Drehmoment vom Hauptgetriebe 14 zum variablen Getriebe 46 und damit zum Schwungmassenspeicher 36 übertragen werden kann.

Durch die beiden Freiläufe 34 und 52 können entweder der Hauptantrieb 12 oder der Schwungmassenspeicher 36 (oder beide) Drehmoment in das Hauptgetriebe 14 einbringen. Umgekehrt wird durch die Freiläufe 34 und 52 verhindert, dass sich der Hauptantrieb 12 und der Schwungmassenspeicher 36 gegenseitig behindern, beispielsweise wenn der Hauptantrieb 12 ausgefallen ist.

Das variable Getriebe 46 kann ein stufenloses Getriebe 46 sein, das beispielsweise über eine Kette 54 bzw. Riemen 54 mechanisch verbundene Kegelscheiben 56 umfasst. Indem der Abstand der Kegelscheiben 56 verändert wird, kann das Übersetzungs- bzw. Übertragungsverhältnis des Getriebes 46 stufenlos eingestellt werden.

Das Einstellen des Übersetzungsverhältnisses des Getriebes kann durch die Steuerung 24 erfolgen, die beispielsweise entsprechende Aktuatoren des variablen Getriebes 46 ansteuert. Diese Steuerung kann auch dazu ausgeführt sein, die aktuelle Drehgeschwindigkeit der Schwungräder 44 und den Betriebszustand (Defekt / Normalbetrieb) des Hauptantriebs 12 zu ermitteln.

Die Fig. 3 zeigt ein Verfahren zum Steuern des Hilfsantriebssystems 22, das von der Steuerung 24 durchgeführt werden kann.

Im Schritt 100 erfasst die Steuerung 24 einen Ausfall oder einen Defekt des Hauptantriebs 12. Ein entsprechendes Signal kann beispielsweise von einer Hauptantriebssteuerung des Antriebs 12 bereitgestellt werden.

Im Schritt 102 wird in einer Übergangsphase zwischen der Erfassung des Defekts und einer beginnenden Autorotation Leistung aus dem Hilfsantriebssystem 22 eingebracht. Dazu stellt die Steuerung 24 das Übersetzungsverhältnis des variablen Getriebes 46 so ein, dass die gewünschte Leistung aus dem Schwungmassenspeicher 36 zum Rotor übertragen wird. Dazu kann die Steuerung 24 die aktuelle Drehgeschwindigkeit des Schwungmassenspeichers 36 ermitteln.

Dreht sich der Hauptantrieb nicht oder nicht genügend schnell, ist der Hauptantrieb 12 aufgrund des Freilaufs 34 vom Hauptgetriebe 14 und aufgrund des Freilaufs 42 vom Schwungmassenspeicher 36 entkoppelt. Weiter ist im Schritt 102 der Schwungmassenspeicher 36 über das variable Getriebe 46 mit dem Hauptgetriebe 14 gekoppelt und wird von der Steuerung 24 derart eingestellt, dass die gewünschte Leistung in den zweiten Eingang 48 des Hauptgetriebes 48 eingebracht wird.

Im Schritt 104 geht der Rotor 18 in Autorotation über und das Hilfsantriebssystem 22 wird dazu eingestellt, keine Leistung einzubringen. Dazu stellt der Pilot den Rotor 18 auf Autorotation, was von der Steuerung 24 erfasst wird, beispielsweise durch ein entsprechendes Signal aus einem Steuersystem des Hubschraubers 8. Nach dem Erfassen des Signals stellt die Steuerung 24 das variable Getriebe 46 so ein, dass keine Leistung mehr zum Rotor 18 übertragen wird.

Im Schritt 106 wird der Landevorgang des Hubschraubers 8 eingeleitet und das Hilfsantriebssystem 22 wird dazu eingestellt, wieder Leistung einzubringen. Der Landevorgang wird vom Pilot dadurch eingeleitet, dass er den Rotor 18 aus der Autorotationstellung heraus in eine Landestellung bewegt, bei der die im Rotor und Getriebe gespeicherte Energie zum Abbremsen des Hubschrauber 8 verwendet wird. Dieses Umstellen kann von der Steuerung 24 erfasst werden, beispielsweise durch ein entsprechendes Signal aus dem Steuersystem des Hubschraubers 8. Danach stellt die Steuerung 24 das variable Getriebe 46 (analog dem Schritt 102) wieder so ein, dass die gewünschte Leistung in den zweiten Eingang 48 des Hauptgetriebes 14 eingebracht wird, um den Rotor 18 zusätzlich anzutreiben.

Um abschätzen zu können, wie ein Schwungmassenspeicher bzw. dessen Schwungrad dimensioniert sein könnte, können die folgenden Formeln herangezogen werden.

| Kinetische Rotationsenergie | $W_{rot} = \dfrac{1}{2} \cdot J \cdot \omega^2$ |
| --- | --- |

(fortgesetzt)

| Drehmoment eines Schwungrades als massiver Zylinder (Eine zylindrische Schale hat ein doppelt so großes Drehmoment.) | $J = \dfrac{1}{2} \cdot m \cdot R^2$ |
|---|---|
| Energiedichte des Schwungrades | $\dfrac{W_{rot}}{m} = \dfrac{R^2 \cdot \omega^2}{4} = \left(\dfrac{R \cdot \omega}{2}\right)^2$ |
| Umfangsgeschwindigkeit | $v_u = R \cdot \omega$ |
| Energiedichte | $\dfrac{W_{rot}}{m} = \dfrac{v_u^2}{4}$ |

Damit ergeben sich für verschiedene Materialien die folgenden Werte.

| | Festigkeit (MPa) | Dichte (kg/m³) | spezifische Festigkeit (MPa/kg) | Maximale Energiedichte (MJ/kg) |
|---|---|---|---|---|
| Stahl | 1700 | 7800 | 0,22 | 0,11 |
| Aluminium | 600 | 2700 | 0,22 | 0,11 |
| Titan | 1200 | 4500 | 0,27 | 0,13 |
| CFRP | 3200 | 2000 | 1,6 | 0,8 |

Trotz ihrer niedrigeren Massendichte können Materialen mit hoher Festigkeit, wie etwa CFRP (Kohlenstofffaser-verstärkte Kunststoffe) als Material für das Schwungrad verwendet werden. Auch Metalle und Metalllegierungen sind als Material geeignet.

Im Vergleich dazu weisen Lithiumbatterien eine Energiedichte von 200 Wh/kg auf, was 0,72 MJ/kg entspricht.

Ein Hubschrauber vom Typ EC120 hat eine Leistungsaufnahme von etwa 100 kW. Für 30 s entspricht dies einem Energiebedarf von 3 MJ. Die Energiedichte von CFRP ist 800 kJ/kg, was zu einem Gewicht des Schwungrads von 3,75 kg führt.

Unter der Annahme eines Faktors von 4 für zusätzliche Bauteile (Lager, Gehäuse) ergibt sich eine Masse für den Schwungmassenspeicher von etwa 15 kg. Auch für die weiteren Komponenten des Hilfsantriebssystems (erstes Getriebe, variables Getriebe, Aktuatoren, Steuerung usw.) kann ein Gewicht von 15 kg angenommen werden. Für das Hilfsantriebssystem ergibt sich dann ein Gesamtgewicht von 30 kg.

Ergänzend ist darauf hinzuweisen, dass "umfassend" keine anderen Elemente oder Schritte ausschließt und "eine" oder "ein" keine Vielzahl ausschließt. Ferner sei darauf hingewiesen, dass Merkmale oder Schritte, die mit Verweis auf eines der obigen Ausführungsbeispiele beschrieben worden sind, auch in Kombination mit anderen Merkmalen oder Schritten anderer oben beschriebener Ausführungsbeispiele verwendet werden können. Bezugszeichen in den Ansprüchen sind nicht als Einschränkung anzusehen.

**Patentansprüche**

1. Hubschrauber mit einem Antriebssystem (10), umfassend:

   einen Hauptantrieb (12) zum Antrieb eines Rotors (18) des Hubschraubers (8);
   einen Schwungmassenspeicher (36), der wenigstens ein Schwungrad (44) umfasst;
   ein erstes Getriebe (38), das den Schwungmassenspeicher (36) derart an den Hauptantrieb (12) koppelt, dass bei Betrieb des Hauptantriebs (12) Leistung aus dem Hauptantrieb (12) in den Schwungmassenspeicher (36) übertragbar ist;
   ein zweites, variables Getriebe (46), das den Schwungmassenspeicher (36) derart mit dem Rotor (18) des Hubschraubers (8) verbindet, dass durch Einstellen eines Übersetzungsverhältnisses des variablen Getriebes (46) eine vorgegebene Leistung zum Rotor (18) übertragbar ist, und
   ein Hauptgetriebe (14) zwischen dem Hauptantrieb (12) und dem Rotor (18); wobei das Hauptgetriebe (14) einen ersten Eingang (32) aufweist, mit dem der Hauptantrieb (12) gekoppelt ist; **dadurch gekennzeichnet, dass** das Hauptgetriebe (14) einen zweiten Eingang (48) aufweist, mit dem der Schwungmassenspeicher (36) über das variable Getriebe (46) gekoppelt ist.

2. Hubschrauber mit einem Antriebssystem (10) nach Anspruch 1,
   wobei das variable Getriebe (46) ein stufenloses Getriebe umfasst.

3. Hubschrauber mit einem Antriebssystem (10) nach Anspruch 1 oder 2,
   wobei das variable Getriebe (46) elektrisch ansteuerbar ist.

4. Hubschrauber mit einem Antriebssystem (10) nach einem der vorhergehenden Ansprüche,
   wobei das erste Getriebe (38) ein Getriebe mit festem Übersetzungsverhältnis umfasst.

5. Hubschrauber mit einem Antriebssystem (10) nach einem der vorhergehenden Ansprüche, weiter umfassend:

   einen Freilauf (42) zwischen dem ersten Getriebe (38) und dem Hauptantrieb (12).

6. Hubschrauber mit einem Antriebssystem (10) nach Anspruch 1, weiter umfassend:

   eine Antriebswelle (30), über die der Hauptantrieb (12) mit dem ersten Eingang (32) des Hauptgetriebes (14) gekoppelt ist.

7. Hubschrauber mit einem Antriebssystem (10) nach Anspruch 6,
   wobei die Antriebswelle (30) über einen Freilauf (34) an das Hauptgetriebe (14) gekoppelt ist.

8. Hubschrauber mit einem Antriebssystem (10) nach Anspruch 6 oder 7,
   wobei das erste Getriebe (38) an die Antriebswelle (30) gekoppelt ist.

9. Hubschrauber mit einem Antriebssystem (10) nach einem der Ansprüche 1 und 6 bis 8, weiter umfassend:

   eine Hilfsantriebswelle (50), über die das variable Getriebe (46) mit dem zweiten Eingang (48) des Hauptgetriebes (14) gekoppelt ist;
   wobei die Hilfsantriebswelle (50) über einen Freilauf (52) an das Hauptgetriebe (14) gekoppelt ist.

10. Verfahren zum Betreiben eines Hilfsantriebssystems (22) eines Hubschraubers (8), das Verfahren umfassend die Schritte:

    Erfassen, ob ein Hauptantrieb (12) des Hubschraubers (8) eine gewünschte Leistung liefert;
    falls der Hauptantrieb (12) nicht die gewünschte Leistung liefert, Verbinden eines Schwungmassenspeichers (36) mit einem Rotor (18) des Hubschraubers (8) mittels eines variablen Getriebes (46), wobei der Schwungmassenspeicher (36) durch den Hauptantrieb (12) im Normalbetrieb mechanisch geladen wurde;
    Steuern eines Übersetzungsverhältnisses des variablen Getriebes (46), so dass eine gewünschte Leistung zum Rotor (18) übertragen wird, und
    Entkoppeln eines Betriebs des Rotors (18) über den Hauptantrieb (12) und eines Betriebs des Rotors (18) über den Schwungmassenspeicher (36) durch einen ersten Eingang (32) und einen zweiten Eingang (48) eines Hauptgetriebes (14), wobei der erste Eingang (32) mit dem Hauptantrieb (12) gekoppelt ist und der zweite Eingang (48) mit dem Schwungmassenspeicher (36) über das variable Getriebe (46) gekoppelt ist.

11. Verfahren nach Anspruch 10, weiter umfassend die Schritte:

    Erfassen, ob der Rotor (18) in Autorotation betrieben wird;
    falls der Rotor (18) in Autorotation betrieben wird, Trennen des Schwungmassenspeichers (36) vom Rotor (18).

12. Verfahren nach Anspruch 11 oder 12, weiter umfassend die Schritte:

    Erfassen, ob ein Landevorgang eingeleitet wird;
    falls ein Landevorgang eingeleitet wird, Verbinden des Schwungmassenspeichers (36) mit dem Rotor (18).

**13.** Steuerung (24) für ein Hilfsantriebssystems (22) eines Hubschraubers (8), die dazu ausgeführt ist, das Verfahren nach einem der Ansprüche 10 bis 12 durchzuführen.

**Claims**

**1.** A helicopter with a drive system (10), comprising:

a main drive (12) configured to drive a rotor (18) of the helicopter (8);
a flywheel mass battery (36) comprising at least one flywheel (44);
a first transmission (38) coupling the flywheel mass battery (36) to the main drive (12) such that, during operation of the main drive (12), output is transferrable from the main drive (12) to the flywheel mass battery (36);
a second, variable transmission (46) connecting the flywheel mass battery (36) to the rotor (18) of the helicopter (8) such that a predetermined output is transferrable to the rotor through adjustment of a transmission ratio of the variable transmission (46), and
a main transmission (14) between the main drive and the rotor;
wherein the main transmission (14) comprises a first input (32) with which the main drive (12) is coupled, **characterized in that** the main transmission (14) has a second input (48) with which the flywheel mass battery (36) is coupled via the variable transmission (46).

**2.** The helicopter with a drive system (10) according to claim 1, wherein the variable transmission (46) is a continuously variable transmission.

**3.** The helicopter with a drive system (10) according to claim 1 or 2, wherein the variable transmission (46) is electrically controllable.

**4.** The helicopter with a drive system (10) according to one of the preceding claims, wherein the first transmission (38) is a transmission with a fixed transmission ratio.

**5.** The helicopter with a drive system (10) according to one of the preceding claims, further comprising:

a freewheel unit (42) between the first transmission (38) and the main drive (12).

**6.** The helicopter with a drive system (10) according to claim 1, further comprising:

a drive shaft (30) via which the main drive (12) is coupled with the first input (32) of the main transmission (14).

**7.** The helicopter with a drive system (10) according to claim 6, wherein the drive shaft (30) is coupled via a freewheel unit (34) with the main transmission (14).

**8.** The helicopter with a drive system (10) according to claim 6 or 7, wherein the first transmission (38) is coupled with the drive shaft (30).

**9.** The helicopter with a drive system (10) according to one of the claims 1 and 6 to 8, further comprising:

an auxiliary drive shaft (50) via which the variable transmission (46) is coupled with the second input (48) of the main transmission (14),
wherein the auxiliary drive shaft (50) is coupled via a freewheel unit (52) with the main transmission (14).

**10.** A method for operating an auxiliary drive system (22) of a helicopter (8), the method comprising the steps:

determining whether a main drive (12) of the helicopter (8) is providing a desired output;
when the main drive (12) is not providing the desired output, connecting of a flywheel mass battery (36) to a rotor (18) of the helicopter (8) via a variable transmission (46), wherein the flywheel mass battery (36) having been charged mechanically by the main drive (12) during normal operation;
controlling of a transmission ratio of the variable transmission (46) such that a desired output is transferred to the rotor (18);
separating of operation of the rotor (18) via the main drive (12) and operation of the rotor (18) via the flywheel mass battery (36) by a first input (32) and a second input (48) of a main transmission (14), wherein the first input (32) is coupled with the main drive (12) and the second input (48) is coupled via the variable transmission (46) with the flywheel mass battery (36).

**11.** The method according to claim 10, further comprising the steps:

detecting whether the rotor (18) is being operated in autorotation; and
separating of the flywheel mass battery (36) from the rotor (18) when it is detected that the rotor (18) is being operated in autorotation.

**12.** The method according to claim 10 or 11, further comprising the steps:

detecting whether a landing procedure is being initiated;
connecting of the flywheel mass battery (36) to the rotor (18) when it is detected that a landing procedure is being initiated.

**13.** Control (24) for an auxiliary drive system (22) of a helicopter (8) which is designed to execute the method as set forth in any one of claims 10 to 12.

**Revendications**

**1.** Un hélicoptère avec un système d'entraînement (10), comprenant :

un entraînement principal (12) configuré pour entraîner un rotor (18) de l'hélicoptère (8);
une batterie de masse de volant d'inertie (36) comprenant au moins un volant d'inertie (44);
une première transmission (38) couplant la batterie de masse d'inertie (36) vers l'entraînement principal (12) de telle sorte que, pendant le fonctionnement de l'entraînement principal (12), la puissance est transférée depuis l'entraînement principale (12) à la batterie de masse d'inertie (36);
une seconde, transmission variable (46) reliant la batterie de masse d'inertie (36) au rotor (18) de l'hélicoptère (8) de telle sorte qu'une puissance prédéterminée est transférée sur le rotor par l'ajustement d'un rapport de transmission de la transmission variable (46), et
une transmission principale (14) entre l'entraînement principal et le rotor;
dans lequel la transmission principale (14) comprend une première entrée (32) avec lequel l'entraînement principal (12) est couplé, **caractérisé en ce que** la transmission principale (14) comporte une seconde entrée (48), avec lequel la batterie de masse de volant d'inertie (36) est couplé par l'intermédiaire de la transmission variable (46).

**2.** L'hélicoptère avec un système d'entraînement (10) selon la revendication 1, dans lequel la transmission variable (46) est une transmission à variation continue.

**3.** L'hélicoptère avec un système d'entraînement (10) selon la revendication 1 ou 2, dans lequel la transmission variable (46) est commandée électriquement.

**4.** L'hélicoptère avec un système d'entraînement (10) selon l'une des revendications précédentes, dans lequel la première transmission (38) est une transmission avec un rapport de transmission fixe.

**5.** L'hélicoptère avec un système d'entraînement (10) selon l'une des revendications précédentes, comprenant en outre:

un mécanisme à roue libre (42) entre la première transmission (38) et l'entraînement principal (12).

**6.** L'hélicoptère avec un système d'entraînement (10) selon la revendication 1, comprenant en outre:

un arbre d'entraînement (30) par l'intermédiaire duquel l'entraînement principal (12) est couplée à la première entrée (32) de la transmission principale (14).

**7.** L'hélicoptère avec un système d'entraînement (10) selon la revendication 6, dans lequel l'arbre d'entraînement (30) est couplé à un mécanisme à roue libre (34) avec la transmission principale (14).

8. L'hélicoptère avec un système d'entraînement (10) selon la revendication 6 ou 7, dans lequel la première transmission (38) est couplé à l'arbre d'entraînement (30).

9. L'hélicoptère avec un système d'entraînement (10) selon la revendication 1 et la revendication 6 à 8, comprenant en outre:

un arbre d'entraînement auxiliaire (50) par l'intermédiaire duquel la transmission variable (46) est couplée à la seconde entrée (48) de la transmission principale (14),
dans lequel l'arbre d'entraînement auxiliaire (50) est couplé par l'intermédiaire d'un mécanisme à roue libre (52) avec la transmission principale (14).

10. Procédé pour faire fonctionner un système d'entraînement auxiliaire (22) d'un hélicoptère (8), le procédé comprenant les étapes consistant à:

déterminer si un entraînement principal (12) de l'hélicoptère (8) fournit une puissance souhaitée;
lorsque l'entraînement principal (12) ne fournit pas la puissance désirée, la connexion d'une batterie de masse de volant d'inertie (36) à un rotor (18) de l'hélicoptère (8) par l'intermédiaire d'une transmission variable (46),
dans lequel la batterie de masse de volant d'inertie (36) ayant été chargé mécaniquement par l'entraînement principal (12) pendant le fonctionnement normal;
réglage d'un rapport de transmission de la transmission variable (46) de telle sorte qu'une puissance souhaitée est transférée sur le rotor (18);
la séparation du fonctionnement du rotor (18) par l'intermédiaire de l'entraînement principal (12) et du fonctionnement du rotor (18) par l'intermédiaire de la batterie de masse de volant d'inertie (36) par une première entrée (32) et une seconde entrée (48) d'une transmission principale (14), dans lequel la première entrée (32) est couplé avec l'entraînement principal (12) et la seconde entrée (48) est couplé par l'intermédiaire de la transmission variable (46) avec la batterie de masse de volant d'inertie (36).

11. Procédé selon la revendication 10, comprenant en outre les étapes consistant à:

détecter si le rotor (18) est actionné en autorotation; et
la séparation de la batterie de masse de volant d'inertie (36) du rotor (18) lorsqu'il est détecté que le rotor (18) est actionné en autorotation.

12. A Procédé selon la revendication 11 ou 12, comprenant en outre les étapes consistant à:

détecter si une procédure d'atterrissage est lancé;
la connexion de la batterie de masse de volant d'inertie (36) au rotor (18) lorsqu'il est détecté qu'une procédure d'atterrissage est lancé.

13. Commande (24) pour un système d'entraînement auxiliaire (22) d'un hélicoptère (8) qui est conçu pour exécuter le procédé selon l'une quelconque des revendications 10 à 12.

## Fig. 1

## Fig. 3

Fig. 2

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- US 4609165 A
- DE 102009058695 A1
- DE 102011014098 A1
- DE 102004033039 A1
- EP 1247736 A1
- EP 0753456 A1
- US 2394513 A